# EUROPÄISCHE PATENTSCHRIFT

(11) **EP 2 095 042 B1**
(45) Veröffentlichungstag und Bekanntmachung des Hinweises auf die Patenterteilung: **04.09.2019**
(21) Anmeldenummer: 07819845.4
(22) Anmeldetag: 16.11.2007
(51) Int. Cl.: F25B 21/00, F25D 21/04

(54) **KÜHLGERÄT MIT EINEM MAGNETISCHEN KÜHLER**
REFRIGERATOR WITH A MAGNETIC COOLER
RÉFRIGÉRATEUR COMPRENANT UN APPAREIL DE FROID MAGNÉTIQUE

(30) Priorität: 01.12.2006 DE 202006018265 U; 09.03.2007 DE 202007003576 U
(43) Veröffentlichungstag der Anmeldung: 02.09.2009
(73) Patentinhaber: Liebherr-Hausgeräte Ochsenhausen GmbH, 88416 Ochsenhausen (DE)
(72) Erfinder: JENDRUSCH, Holger, 88416 Ochsenhausen (DE); BLERSCH, Dietmar, 88521 Ertingen (DE); SCHMID, Eugen, 88400 Mettenberg (DE); GINDELE, Thomas, 88299 Leutkirch (DE); WIEST, Matthias, 88416 Hattenburg (DE); SIEGEL, Didier, 88416 Steinhausen (DE)
(74) Vertreter: Herrmann, Uwe
(86) Internationale Anmeldenummer: PCT/EP2007/009947
(87) Internationale Veröffentlichungsnummer: WO 2008/064784

(56) Entgegenhaltungen:
- WO-A-98/50739
- WO-A-2006/047797
- DE-A1- 2 704 562
- FR-A- 2 386 791
- JP-A- 1 155 159
- US-A- 2 350 249
- US-A- 3 226 943
- US-A- 4 272 969
- MULLER P: "REFRIGERATION MAGNETIQUE, UNE REVOLUTION POUR DEMAIN?" REVUE PRATIQUE DU FROID ET DU CONDITIONNEMENT D'AIR, PYC EDITION SA., PARIS, FR, Nr. 924, April 2004 (2004-04), Seiten 59-63, XP001190727 ISSN: 0370-6699
- BOHIGAS X ET AL: "Room-Temperature Magnetic Refrigerator Using Permanent Magnets" IEEE TRANSACTIONS ON MAGNETICS, IEEE SERVICE CENTER, NEW YORK, NY, US, Bd. 36, Nr. 3, Mai 2000 (2000-05), XP011032453 ISSN: 0018-9464
- LI ET AL: "A practical model for analysis of active magnetic regenerative refrigerators for room temperature applications" INTERNATIONAL JOURNAL OF REFRIGERATION, ELSEVIER, PARIS, FR, Bd. 29, Nr. 8, 22. November 2006 (2006-11-22), Seiten 1259-1266, XP005775726 ISSN: 0140-7007

## Beschreibung

Die vorliegende Erfindung betrifft ein Kühlgerät mit einem magnetischen Kühler, mit einem kalten Wärmetauscher zur Kühlung des Kühlraums des Gerätes sowie mit Mitteln zur Erfassung einer für die Temperatur des kalten Wärmetauschers repräsentativen Wertes.

Kühl- und/oder Gefriergeräte mit magnetischer Kühlung arbeiten nach dem Prinzip des sogenannten magnetokalorischen Effektes. Aus dem Stand der Technik ist es bekannt, dass der magnetische Kühler Wärmetauschereinheiten aufweist, die aus einem Material bestehen oder ein Material aufweisen, das sich bei der Magnetisierung erwärmt und das bei der Entmagnetisierung eine Temperaturerniedrigung erfährt. Wird ein Wärmeträgermedium, beispielsweise Sole oder ein Alkoholgemisch, durch die auf diese Weise erwärmte Wärmetauschereinheit geführt, erfährt es eine Temperaturerhöhung. Wird es demgegenüber durch die kalte Wärmetauschereinheit geführt, erfährt es dementsprechend eine Temperaturerniedrigung. Das auf diese Weise gekühlte Wärmeträgermedium wird sodann durch den sogenannten kalten Wärmetauscher geführt, der im oder im Bereich des Kühl- bzw. Gefrierraums angeordnet ist und zu dessen Kühlung dient.

Bei vorbekannten Kühl- und/oder Gefriergeräten ist es üblich, dass der magnetische Kühler mit Pumpe beim Erreichen eines Temperaturausschaltwertes ausgeschaltet wird. Dies bedeutet, dass der magnetische Kühler sowie die Pumpe ausgeschaltet werden, wenn der Wärmetauscher bzw. der zu kühlende Raum einen bestimmten unteren Temperaturwert erreicht hat. Sodann erfolgt bei ausgeschaltetem magnetischen Kühler und Pumpe die Erwärmung des Kühl- bzw. Gefrierraums sowie des kalten Wärmetauschers. Die Einschaltung des magnetischen Kühlers mit Pumpe erfolgt erst dann wieder, wenn der kalte Wärmetauscher vollständig abgetaut wurde. Das erneute Einschalten kann beispielsweise bei einer Temperatur des kalten Wärmetauschers von +5 °C erfolgen.

Diese Vorgehensweise ist insofern nachteilig, als dass der Energieverbrauch des Gerätes vergleichsweise hoch ist und darüber hinaus aufgrund des periodischen Betriebs des magnetischen Kühlers und der Pumpe Temperaturschwankungen bestehen.

WO 2006/047797 A betrifft ein Kühlverfahren, bei dem ein Verdampfer derart betrieben wird, dass dessen Arbeitstemperatur nicht unter einen bestimmten Wert, beispielsweise nicht unter 4 °C, fällt. JP 1 155159 A und MULLER P:"REFRIGERATION MAGNETIQUE, UNE REVOLUTION POUR DEMAIN", REVUE PRATIQUE DU FROID ET DU CONDITIONNEMENT D'AIR, PYC EDITION SA., PARIS, FR, Nr. 924, April 2004 (2004 - 04), Seiten 59 - 63 betreffen eine magnetische Kühlung.

Li et AI "A practical model for analysis of active magnetic regenerative refrigerators for room temperature applications", INTERNATIONAL JOURNAL OF REFRIGERATION, ELSEVIER, PARIS, FR, Band 29, Nummer 8, veröffentlicht am 22-11-2006, Seiten 1259 bis 1266, offenbart einen magnetischen Kühler, der Wasser als Wärmeträger benutzt.

Der vorliegenden Erfindung liegt daher die Aufgabe zugrunde, ein Kühlgerät der eingangs genannten Art dahingehend weiterzubilden, dass dieses hinsichtlich des Energieverbrauchs verbessert ist und bei dem Temperaturschwankungen vermieden oder auf ein Minimum reduziert werden.

Diese Aufgabe wird durch ein Kühlgerät mit den Merkmalen des Anspruchs 1 gelöst. Danach ist vorgesehen, dass das Gerät eine Steuer- oder Regelungseinheit aufweist, mittels derer die Temperatur und/oder die Menge des dem kalten Wärmetauscher zugeführten Wärmeträgermediums derart einstellbar ist, dass die Temperatur des kalten Wärmetauschers im Kühlbetrieb nicht unter +0 °C sinkt. Dies bedeutet, dass die Steuer- oder Regeleinheit die Kälteleistung derart einstellt, dass der kalte Wärmetauscher keine Temperatur von unter 0 °C annimmt, wodurch dessen Vereisung wirksam verhindert werden kann. Aufgrund der verringerten Kälteleistung ist der kalte Wärmetauscher entsprechend der Größe des Kühlraumes vergleichsweise groß auszulegen, um insgesamt die erforderliche Kühlung bereitstellen zu können.

Das Gerät weist eine Pumpe zur Förderung des Wärmeträgermediums auf, und die Steuer- oder Regelungseinheit ist derart ausgeführt, dass sie auf die Förderleistung der Pumpe einwirkt. Somit ist die Förderleistung der Pumpe zu reduzieren, d. h. die Fördermenge des von der Pumpe geförderten Wärmeträgermediums zu verringern, um sicherzustellen, dass der kalte Wärmetauscher keine Temperaturen von unter 0 °C erreicht.

Ebenso ist es denkbar, dass die Steuer- oder Regelungseinheit derart ausgeführt ist, dass sie auf die Stärke und/oder Position des in dem magnetischen Kühler wirkenden Magnetfeldes einwirkt. Denkbar ist somit ferner, die Kälteleistung beispielsweise durch eine Reduzierung des Magnetfeldes zu verringern. Wirkt ein schwächeres Magnetfeld ein, ist der magnetokalorische Effekt entsprechend verringert und es kommt zu einer geringeren Erwärmung bzw. Abkühlung des durch den magnetischen Kühler strömenden Wärmeträgermediums, so dass dementsprechend auch die Kälteleistung des kalten Wärmetauschers reduziert ist.

In weiterer Ausgestaltung der Erfindung ist vorgesehen, dass die Steuer- oder Regelungseinheit derart ausgeführt ist, dass die Förderleistung der Pumpe und/oder die Magnetisierung im magnetischen Kühler in Abhängigkeit einer Regelabweichung, d. h. der Abweichung des gemessenen Wertes von einem Sollwert oder Sollwertbereich erfolgt. Liegt die gemessene Temperatur bereits im Bereich des Temperatur-Sollwertes, kann eine Veränderung der Förderleistung der Pumpe oder der Magnetisierung im magnetischen Kühler nicht erforderlich sein bzw. je nach Regelabweichung kommt eine Steigerung oder Verringerung der Förderleistung der Pumpe bzw. der Stärke des Magnetfeldes in Betracht.

Denkbar ist es somit, die Förderleistung der Pumpe und/oder die Stärke oder Position des Magnetfeldes als Stellgrößen eines Regelkreises einzusetzen, dessen Sollgröße ein Temperaturwert oder auch einen Temperaturbereich darstellt.

Ein Vorteil der vorliegenden Erfindung besteht darin, dass der magnetische Kühler und die Pumpe zur Förderung, des Wärmeträgermediums derart ausgeführt sind, dass sie im Dauerbetrieb laufen. Dies ist darauf zurückzuführen, dass erfindungsgemäß ein Abtauzyklus nicht erforderlich ist, da der kalte Wärmetauscher nicht bei Temperaturen unter 0 °C betrieben wird. Sollte die Temperatur des kalten Wärmetauschers doch unter 0 °C fallen, kann vorgesehen sein, dass azyklisch ein Abtauzyklus eingeschoben wird, sollte dies erforderlich sein. Die Vorteile der Erfindung bestehen darin, dass aufgrund des gleichmäßigen und konstanten Betriebes des magnetischen Kühlers und der Pumpe der Energieverbrauch des Gerätes gegenüber vorbekannten Geräten verringert ist und dass auch Temperaturschwankungen nicht oder nur in verringertem Maße auftreten.

## Patentansprüche

1. Kühlgerät, aufweisend einen magnetischen Kühler und einen kalten Wärmetauscher zur Kühlung des Kühlraums des Gerätes sowie Mitteln zur Erfassung eines für die Temperatur des kalten Wärmetauschers repräsentativen Wertes, wobei das Gerät eine Pumpe zur Förderung des Wärmeträgermediums und eine Steuer- oder Regelungseinheit aufweist, **dadurch gekennzeichnet,**
**dass** mittels der Steuer- oder Regelungseinheit die Fördermenge des von der Pumpe geförderten Wärmeträgermediums derart einstellbar ist, dass die Temperatur des kalten Wärmetauschers im Kühlbetrieb nicht unter 0°C sinkt, und dass der magnetische Kühler und die Pumpe derart ausgeführt sind, daß sie im Dauerbetrieb laufen, da kein Abtauzyklus des kalten Wärmetauschers erforderlich ist.

2. Kühlgerät nach Anspruch 1, **dadurch gekennzeichnet, daß** die Steuer- oder Regelungseinheit derart ausgeführt ist, daß sie die Stärke oder Position des in dem magnetischen Kühler wirkenden Magnetfeldes verändert.

3. Kühlgerät nach Anspruch 1 oder Anspruch 2, **dadurch gekennzeichnet, dass** die Steuer- oder Regelungseinheit derart ausgeführt ist, dass die Temperatur des kalten Wärmetauschers auf einen vorgegebenen Sollwert oder in einem Sollwertbereich eingeregelt wird.

## Claims

1. A refrigerator, including a magnetic cooler and a cold heat exchanger for cooling the cooling space of the appliance and means for detecting a value representative of the temperature of the cold heat exchanger, wherein the appliance includes a pump for delivering the heat transfer medium and a control or regulating unit, **characterized in that** by means of the control or regulating unit the delivery rate of the heat transfer medium delivered by the pump is adjustable such that in cooling operation the temperature of the cold heat exchanger does not go below 0°C, and that the magnetic cooler and the pump are configured such that they run continuously, as no defrosting cycle of the cold heat exchanger is required.

2. The refrigerator according to claim 1, **characterized in that** the control or regulating unit is configured such that it varies the strength or position of the magnetic field acting in the magnetic cooler.

3. The refrigerator according to claim 1 or claim 2, **characterized in that** the control or regulating unit is configured such that the temperature of the cold heat exchanger is adjusted to a specified desired value or within a range of desired values.

## Revendications

1. Réfrigérateur, comportant un refroidisseur magnétique et un échangeur thermique froid pour refroidir l'espace de refroidissement de l'appareil et des moyens pour détecter une valeur représentative de la température de l'échangeur thermique froid, l'appareil comportant une pompe pour refouler le fluide caloporteur et une unité de commande ou de régulation, **caractérisé en ce qu'**au moyen de l'unité de commande ou de régulation le débit de refoulement du fluide caloporteur refoulé par la pompe est réglable de sorte que dans l'opération de refroidissement la température de l'échangeur thermique froid ne descend pas en dessous de 0°C, et que le refroidisseur magnétique et la pompe sont configurés de sorte qu'ils fonctionnent en continu, car aucun cycle de dégivrage de l'échangeur thermique froid est nécessaire.

2. Réfrigérateur selon la revendication 1, **caractérisé en ce que** l'unité de commande ou de régulation est configurée de sorte qu'elle fait varier l'intensité ou position du champ magnétique agissant dans le refroidisseur magnétique.

3. Réfrigérateur selon la revendication 1 ou revendication 2, **caractérisé en ce que** l'unité de commande ou de régulation est configurée de sorte que la température de l'échangeur thermique froid est ajustée à une valeur de consigne prédéterminée ou dans une plage de valeurs de consigne.
